Europäisches Patentamt

European Patent Office

Office européen des brevets

(11) Publication number: **0 264 558 B1**

## (12) EUROPEAN PATENT SPECIFICATION

(45) Date of publication of patent specification: **02.01.92** (51) Int. Cl.⁵: **B29C 45/52**

(21) Application number: **87111479.9**

(22) Date of filing: **07.08.87**

---

(54) **Non-return valve for screw injection units for thermoplastics.**

---

(30) Priority: **20.08.86 IT 2281086 U**

(43) Date of publication of application:
**27.04.88 Bulletin 88/17**

(45) Publication of the grant of the patent:
**02.01.92 Bulletin 92/01**

(84) Designated Contracting States:
**AT CH DE ES FR GB IT LI**

(56) References cited:
**GB-A- 866 929**
**US-A- 2 885 734**
**US-A- 3 007 202**
**US-A- 4 065 108**

(73) Proprietor: **Cappelletti, Marzio**
**Via Marco d'Agrate 6**
**I-20052 Monza Milano(IT)**

(72) Inventor: **Cappelletti, Marzio**
**Via Marco d'Agrate 6**
**I-20052 Monza Milano(IT)**

(74) Representative: **Modiano, Guido et al**
**MODIANO, JOSIF, PISANTY & STAUB**
**Modiano & Associati Via Meravigli, 16**
**I-20123 Milano(IT)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a one-way valve for feeding nozzles in injection assemblies for thermoplastics according the preamble of the indipendent claim 1.

One-way valves are known which are fitted to injection assemblies for thermoplastics. Generally these valves comprise: a stem which is associated with the end of a screw feeder, which by means of its rotation conveys the thermoplastics in the pasty state along a conveyance channel up to the nozzle connected to the mold to be filled; a valve body which is mounted axially slideable on the stem and which is provided with a passage in an axial direction for the thermoplastics fed by the screw. On the stem, on opposite sides with respect to the valve body, a first and a second abutment are provided, the first abutment consisting of a disc-like element rigidly associated coaxially with the stem on the side facing the screw. As the screw advances, the disc-like element engages with the value body, occluding the passage, and the further advancement of the screw also moves the valve body, which in this step acts like a piston, causing an increase in the pressure of the thermoplastics which is injected in the mold through the nozzle. The second abutment engages with the valve body when the screw is moved backwards, at the end of the injection, to return the valve body to its initial position. The second abutment is formed by the end of a shoe member directed towards the nozzle and is cone-shaped with fins which indeed define the second abutment; channels for the flow of the thermoplastics material coming from the valve body are defined between the fins.

US-A-3 007 202, upon which the preamble of the independent claim is based, discloses a non-return valve in which extend a plurality of narrow diffusing passages with inner portions lying parallel to the longitudinal axis of the valve and outer portions flaring outwardly and radially. GB-A-866 929 discloses a non-return valve containing a plurality of narrow bore passages.

Such known types of valves have some disadvantages.

In particular, the structure of the valve body, which is either formed simply with an internally hollow cylindrical configuration or with a configuration provided with narrow passages, and the configuration of the shoe member, have denounced considerable wear-out problems.

More particularly, the channels defined by the fins of the shoe member and the narrow passages provide, all together, a section for the passage of the thermoplastics material exiting from the valve which is smaller than the inflow passage section defined by the valve body and by the disc-like element in the disengagement position. Due to this fact there is an increase in the speed of the thermoplastics material and in the stresses at the fins of the shoe member, with consequent wear-out.

This problem is extremely severe if metallic particles cannot be tolerated in parts molded for special uses. With the diffusion of thermoplastics materials loaded with very hard materials, such as for example glass fibers, this problem is increasingly aggravated, forcing the use of increasingly valuable materials for the manufacture of the fins of the shoe member, such as for example stellite, which however, besides having high costs, considerably complicates the production of the shoe member.

Moreover, due to the small passage sections, the thermoplastics material must be kept at relatively high temperatures which ensure good fluidity so that, in case of very light-colored resins, an undesirable alteration in the color may occur.

The aim of the present invention is to provide a one-way valve with such a structure as to eliminate wear-out problems even without the use of special, high-hardness materials.

Within this aim, an object of the invention is to provide a one-way valve with a structure which is simple to produce and has a modest cost.

Another object of the invention is to allow the injection of thermoplastics material at limited temperatures, so as to protect the color of the material.

This aim, as well as these objects and others which will become apparent hereinafter, are achieved by a one-way valve as defined in the appended claim 1.

Further embodiments of the invention are defined in the features of the dependent claims.

The characteristics and advantages of the invention will become apparent from the detailed description of the one-way valve according to the invention, illustrated only by way of non-limitative example in the accompanying drawings, wherein:

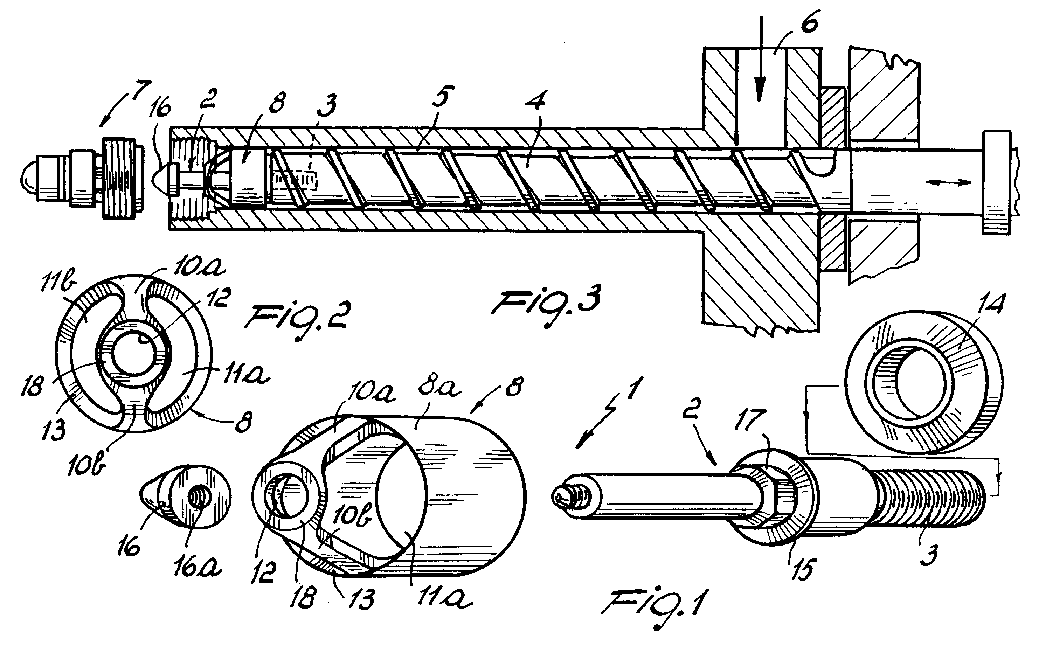

figure 1 is a perspective exploded view of the valve according to the invention;

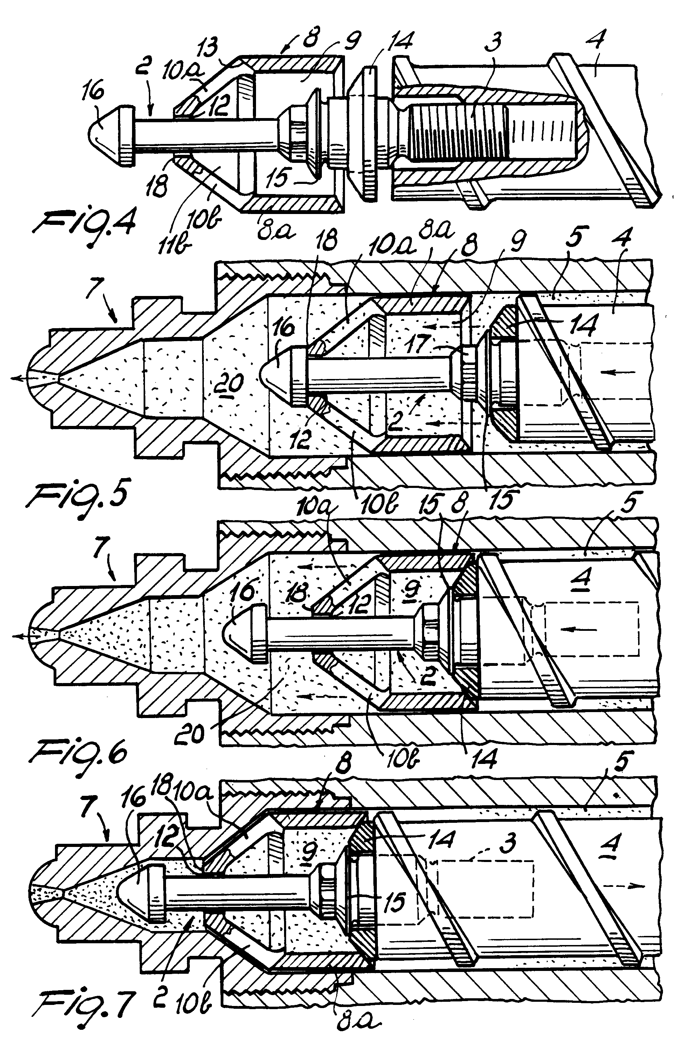

figure 2 is a front elevation view of the valve body according to the invention;

figure 3 is a cross section view of an injection assembly for thermoplastics material, illustrating the application of the valve according to the invention;

figure 4 is a view of the valve according to the invention in partial cross section during assembly to the end of the screw;

figures 5 to 7 illustrate the operation of the valve according to the invention.

With reference to the above described figures, the valve according to the invention, generally indicated by the reference numeral 1, comprises a stem 2 provided at one end with a thread 3 for its association with the end of a known feeder screw 4, which is rotatable and axially slideable within a conveyance channel 5 fed through a feeding channel 6 with thermoplastics material, to be injected into the molds, made fluid by the passage in the conveyance channel 5 which is appropriately heated in a known manner. The stem 2 is associated with the screw proximate to the delivery end of the conveyance channel 5, whereon a known nozzle 7, which feeds the molds, is fitted.

A value body 8 is mounted on the stem 2, is slideable along the axis of the stem, and is axially traversed by a passage 9 to allow the flow of the thermoplastics material fed to the valve by virtue of the rotation of the screw.

According to the invention, the body 8 consists of a portion 8a having a substantially tubular or internally hollow cylindrical configuration, with two spokes 10a and 10b which extend from the edge of the portion 8a which is located on the side opposite to the screw, in the direction of the stem 2. Openings 11a and 11b are thus formed between the two spokes 10a and 10b, for the flow of the thermoplastics material through the body 8.

The two spokes 10a and 10b connect proximate to the stem at a shoulder 18 having a hole 12 which is slideably traversed by the stem 2.

In order to increase the passage section of the openings 11a and 11b, the spokes extend inclined with respect to the axis of the stem and form therewith an acute angle on the side facing the portion 8a.

Again in order to facilitate the flow of the thermoplastics material through the body 8, the portion 8a is provided, on the edge not facing the screw, with an inner bevel 13 substantially at 45˚.

Two abutments are provided on the stem 2 on opposite sides with respect to the body 8, to axially limit the sliding of the body 8 with respect to the stem. More in particular, the first abutment, arranged on the side facing the screw, consists of a disc-like body 14 which is gripped between a shoulder 15 of the stem and the end of the screw during assembly. The disc-like body 14 constitutes the shutter of the valve which, as the screw advances towards the delivery end, is moved to abut against the body 8 so as to close the passage 9.

The second abutment consists of a substantially conical shoe member 16 removably associated with the free end of the stem. The shoe member 16 has its apex directed away from the screw and is axially provided with a threaded hole 16a for its association with the end of the stem so as to define, with its base, the second abutment.

For the sake of descriptive completeness, it should be noted that a section 17 of the stem can have a prismatic configuration to facilitate assembly of the valve on the screw.

The operation of the valve according to the invention is as follows.

Initially, the disc-like body 14 is disengaged from the body 8 and the thermoplastics material 20 is pushed by virtue of the rotation of the screw 4 to pass beyond the disc-like body and traverse the passage 9. In this step, illustrated in figure 5, the material does not meet, in its flow, great resistance at the output of the valve since, by virtue of the structure of the valve according to the invention, the overall flow section determined by the openings 11a and 11b is greater than the flow section defined between the disc-like body 14 and the inlet of the body 8.

Once the thermoplastics material feed step is complete, the screw 4 is moved axially forwards towards the nozzle 7. In this manner the disc-like body 14 occludes the body 8, as illustrated in figure 6, and, in the subsequent further advancement of the screw, the body 8 acts like a piston pushing with high pressure the thermoplastics material 20 through the nozzle 7, as illustrated in figure 7.

Once injection is complete, the screw 4 is moved backwards so that the disc-like body 14 disengages from the body 8, while the latter, engaging by means of the shoulder 18 with the shoe member 16, is returned to its initial position.

In practice, it has been observed that the valve according to the invention fully achieves the intended aim, since by virtue of the increased flow sections of the material leaving the valve, reduced stresses, and therefore a reduced wear, are achieved, with consequent increase in the life of the valve even in the presence of thermoplastics materials loaded with high-hardness additives.

Another advantage, due to the particular structure of the valve, is to allow the correct flow of the material even at relatively low temperatures so as to not alter the color of the material.

Not least advantage is that the use of expensive and difficult to work anti-wear materials is not required.

In practice, the materials employed, as well as the dimensions, may be any according to the requirements.

**Claims**

1. A one-way valve (1) for feeding nozzles in injection assemblies for thermoplastics, comprising: a stem (2) which is rigidly associable with the end of a screw feeder (4) in a thermoplastics conveying channel (5) proximate to the delivery end of said conveying channel, a valve body (8) including a substantially tubular portion (8a), said valve body being mounted axially slidably on said stem (2) and being provided with a passage (9) in an axial direction for the thermoplastics fed by said screw, on said stem there being provided, on opposite sides with respect to said body, a first abutment (14) and a second abutment (16), the first abutment, facing said screw (4), being engageable with said body (8) to occlude said passage (9) when said screw is advanced towards said delivery end, the second abutment (16) being engageable with a portion (18) of said body (8) during the backward motion of said screw (4), openings (11a,11b) being defined in said body (8) for the flow of thermoplastics through the body from said conveying channel (5), through said passage (9) and through said openings, (11a,11b) to the nozzle (7), said one-way valve characterized in that said body (8) has at least two spokes (10a,10b) extending from said tubular portion (8a) at an edge thereof not facing said first abutment (16) in a forward extension which is inclined with respect to the axis of said stem (2) to thereby form with said axis an acute angle facing said tubular portion (8a), the ends of said spokes (10a,10b) opposite the ends thereof at said edge of said tubular portion (8a) defining a shoulder (18) which constitutes the portion of said body (8) which engages with said second abutment (16) during the backward motion of said screw (4), said openings (11a,11b) being defined in said body (8) between said extending spokes (10a,10b).

2. A one-way valve according to claim 1, characterized in that said openings (11a,11b) defined between said spokes (10a,10b) define, when said shoulder (18) is engaged with said second abutment (16), a flow section of the thermoplastics material which is substantially greater than the flow section defined between said first abutment (14) and said body (8) in their disengaged position.

3. A one-way valve according to claims 1 and 2, characterized in that said spokes (10a,10b) are joined proximate to said stem (2) to form said shoulder (18) which is provided with a hole (12) slidably coupled to said stem.

4. A one-way valve according to any one of the preceding claims, characterized in that said stem (2) is provided, on the opposite side with respect to said screw (4), with a substantially conical removable shoe member (16) which constitutes said second abutment.

5. A one-way valve according to any one of the preceding claims, characterized in that said shoe member (16) is axially provided with a threaded hole (16a) engageable with the corresponding end of said stem (2).

6. A one-way valve according to any one of the preceding claims, characterized in that said second abutment substantially consists of the base of said shoe member (16) facing said body.

7. A one-way valve according to any one of the preceding claims, characterized in that said substantially tubular portion (8a) is provided, on the edge facing said shoe member (16), with an inner bevel (13) with an inclination substantially of 45 degrees.

**Revendications**

1. Clapet anti-retour (1) pour alimenter des buses dans des ensembles d'injection pour matières thermoplastiques, comprenant : une tige (2) qui peut être solidarisée de l'extrémité d'une vis d'alimentation (4) dans un conduit de transport de matières thermoplastiques (5) à proximité de l'extrémité de fourniture de ce conduit de transport, un corps de clapet (8) comportant une portion pratiquement tubulaire (8a), le corps de clapet étant monté pour pouvoir coulisser axialement sur la tige (2) et comportant un passage axial (9) pour la matière thermoplastique amenée par la vis, une première butée (14) et une deuxième butée (16) étant prévues sur la tige de part et d'autre du corps, la première butée, en vis-à-vis de la vis (4), pouvant coopérer avec le corps (8) pour obturer le passage (9) lorsque la vis avance en direction de l'extrémité de fourniture, la deuxième butée (16) pouvant coopérer avec une portion (18) du corps (8) lors du recul de la vis (4), des ouvertures (11a,11b) étant définies dans ce corps (8) pour l'écoulement de la matière thermoplastique à travers le corps en provenance du conduit de transport (5) à travers le passage (9) et à travers les ouvertures (11a,11b) jusqu'à la buse (7), ce clapet anti-retour étant caractérisé en ce que le corps (8) a au moins deux bras (10a,10b) s'étendant vers l'avant depuis un bord de la portion tubulaire (8a) ne faisant pas face à la première butée (16) en étant inclinés par rapport à l'axe de la tige (2) et en faisant, avec cet axe, un angle aigu en vis-à-vis de la portion tubulaire (8a), les extrémités des bras (10a,10b) opposées à ses extrémités au niveau du bord de la portion tubulaire (8a) définissant un épaulement (18) qui constitue la portion de ce corps (8) qui coopère avec la deuxième butée (16) lors du recul de la vis (4), les ouvertures (11a,11b) étant définies dans le corps (8) entre les bras (10a,10b).

2. Clapet anti-retour selon la revendication 1, caractérisé en ce que les ouvertures (11a,11b), définies entre les bras (10a,10b), définissent, lorsque l'épaulement (18) coopère avec la deuxième butée (16), une section d'écoulement de la matière plastique qui est notablement plus grande que la section d'écoulement définie entre la première butée (14) et le corps (8) lorsque la première butée est dégagée du corps.

3. Clapet anti-retour selon la revendication 1 et la revendication 2, caractérisé en ce que les bras (10a,10b) se rejoignent à proximité de la tige (2) pour former l'épaulement (18) qui présente un trou (12) associé , de façon coulissante, à la tige.

4. Clapet anti-retour selon l'une quelconque des revendications précédentes, caractérisé en ce que la tige (2) comporte, sur le côté opposé à la vis (4), un sabot amovible pratiquement conique (16) qui constitue la deuxième butée.

5. Clapet anti-retour selon l'une quelconque des revendications précédentes, caractérisé en ce que ce sabot (16) comporte axialement un trou taraudé (16a) pouvant coopérer avec l'extrémité correspondante de la tige (2).

6. Clapet anti-retour selon l'une quelconque des revendications précédentes, caractérisé en ce que la deuxième butée est essentiellement constituée par la base de ce sabot (16) en vis-à-vis du corps.

7. Clapet anti-retour selon l'une quelconque des revendications précédentes, caractérisé en ce que la portion pratiquement tubulaire (8a) présente, sur le bord en vis-à-vis du sabot (16), un biseau intérieur (13) incliné pratiquement à 45°.

**Patentansprüche**

1. Ein-Weg-Ventil (1) für Materialzufuhrdüsen in Spritzgußanordnungen für Thermoplaste, mit einem Schaft (2), der starr mit dem Ende eines Schneckenförderers (4) in einem Thermoplastförderkanal (5) nahe dem Austragsende des Förderkanals verbindbar ist, einem einen im wesentlichen rohrförmigen Abschnitt (8a) umfassenden Ventilkörper (8), wobei der Ventilkörper axial verschiebbar auf dem Schaft (2) angebracht ist und in axialer Richtung mit einem Durchgang (9) für das von der Schnecke geförderte thermoplastische Material versehen ist, wobei auf dem Schaft auf bezüglich des Körpers einander gegenüberliegenden Seiten ein erster Anschlag (14) und ein zweiter Anschlag (16) vorgesehen sind, wobei der der Schnecke (4) gegenüberliegende erste Anschlag mit dem Körper (8) in Eingriff bringbar ist, um den Durchgang (9) zu verschließen, wenn die Schnecke in Richtung auf das Austragsende hin bewegt wird, wobei der zweite Anschlag (16) mit einem Abschnitt (18) des Körpers (8) während der Rückwärtsbewegung der Schnecke (4) in Eingriff bringbar ist, in dem Körper (8) ausgebildeten Öffnungen (11a, 11b) für das Fließen des thermoplastischen Materials durch den Körper hindurch ausgehend von dem Förderkanal (5) durch den Durchgang (9) und durch die Öffnungen (11a, 11b) zu der Düse (7), dadurch gekennzeichnet, daß der Körper (8) zumindest zwei sich ausgehend von dem rohrförmigen Abschnitt (8a) an einer dem ersten Anschlag (14) abgewandten Kante des Abschnitts (8a) in einer Verlängerung nach vorne erstreckende Speichen (10a, 10b) aufweist, die bezüglich der Achse des Schaftes (2) geneigt ist, um so einen spitzen Winkel mit der dem rohrförmigen Abschnitt (8a) gegenüberliegenden Achse zu bilden, wobei die einen Enden der Speichen (10a, 10b), die den anderen Enden davon an der Kante des rohrförmigen Abschnitts (8a) gegenüberliegen, einen Absatz (18) bilden, der den Abschnitt des Körpers (8) darstellt, der mit dem zweiten Anschlag (16) während der Rückwärtsbewegung der Schnecke (4) in Eingriff kommt, wobei die Öffnungen (11a, 11b) in dem Körper (8) zwischen den sich erstreckenden Speichen (10a, 10b) ausgebildet sind.

2. Ein-Weg-Ventil nach Anspruch 1, dadurch gekennzeichnet, daß die zwischen den Speichen (10a, 10b) gebildeten Öffnungen (11a, 11b) bei Eingriff des Absatzes (18) mit dem zweiten Anschlag (16) einen Fließabschnitt für das thermoplastische Material bilden, der im wesentlichen größer als der Fließabschnitt ist, der zwischen dem ersten Anschlag (14) und dem Gehäuse (8) gebildet ist, wenn sie sich in einer außer Eingriff gebrachten Position befinden.

3. Ein-Weg-Ventil nach Anspruch 1 und 2, dadurch gekennzeichnet, daß die Speichen (10a, 10b) nahe dem Schaft (2) verbunden sind, um den Absatz (18) zu bilden, der mit einer verschiebbar mit dem Schaft verbundenen Bohrung (12) versehen ist.

4. Ein-Weg-Ventil nach einem der vorhergehenden Ansprüche, dadurch gekennzeichnet, daß der Schaft (2) auf der in bezug auf die Schnekke (4) gegenüberliegenden Seite mit einem im wesentlichen konischen, entfernbaren Schuh (16) versehen ist, der den zweiten Anschlag darstellt.

5. Ein-Weg-Ventil nach einem der vorhergehenden Ansprüche, dadurch gekennzeichnet, daß der Schuh (16) axial mit einer Gewindebohrung (16a) versehen ist, die mit dem entsprechenden Ende des Schaftes (2) in Eingriff bringbar ist.

6. Ein-Weg-Ventil nach einem der vorhergehenden Ansprüche, dadurch gekennzeichnet, daß der zweite Anschlag im wesentlichen aus der dem Körper zugewandten Grundfläche des Schuhs (16) besteht.

7. Ein-Weg-Ventil nach einem der vorhergehenden Ansprüche, dadurch gekennzeichnet, daß der im wesentlichen rohrförmige Abschnitt (8a) auf der dem Schuh (16) gegenüberliegenden Kante mit einer inneren Abschrägung (13) mit einer Neigung von im wesentlichen 45$^{\circ}$ versehen ist.

Fig.1

Fig.2

Fig.3

Fig.4

Fig.5

Fig.6

Fig.7